(19)

Europäisches
Patentamt
European
Patent Office
Office européen
des brevets

(11) **EP 3 587 235 A1**

(12) **EUROPEAN PATENT APPLICATION**

(43) Date of publication:
**01.01.2020 Bulletin 2020/01**

(21) Application number: **18180607.6**

(22) Date of filing: **28.06.2018**

(51) Int Cl.:
**B62M 6/45** *(2010.01)*        **B62M 6/55** *(2010.01)*
**B62M 6/60** *(2010.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **intuEdrive BV
1910 Kampenhout (BE)**

(72) Inventors:
• **Keppens, Tomas
  B-1910 Kampenhout (BE)**
• **Heidbuchel, Jorrit
  B-3210 Linden (BE)**

(74) Representative: **IPLodge bvba
Technologielaan 9
3001 Heverlee (BE)**

(54) **METHOD FOR PROVIDING ELECTRICAL PROPULSION ASSISTANCE IN A PEDAL-PROPELLED VEHICLE, AND CONTROLLER IMPLEMENTING SAME**

(57)     The invention pertains to a method for providing assistance in a pedal vehicle having an electric motor, an actuator, and a control unit configured to provide control signals to said electric motor and said actuator based on a crank axle input. The pedals, electric motor, and actuator are configured to propel the vehicle via a drive train. The method comprises: detecting as a take-off attempt, the simultaneous occurrence of at least the following conditions: vehicle at stand-still and forward torque being applied to the pedals; permitting during said take-off attempt a forward rotation of said pedals; and providing supporting torque after detection of said take-off attempt. Appropriate control signals are provided to the motor and actuator to apply a predetermined countertorque to the pedals during the forward rotation and appropriate control signals are provided to the motor and actuator to provide supporting torque when a predetermined take-off criterion is met. The invention also pertains to a computer program product, a controller, and a vehicle.

Figure 1

EP 3 587 235 A1

## EP 3 587 235 A1

## Description

**Field of the Invention**

The present invention pertains to the field of pedal-propelled vehicles with electrical propulsion assistance, such as electrical bicycles ("e-bikes"), and in particular to systems and methods for controlling the motor(s) that provide assistance.

**Background**

International patent application publication no. WO 2013/160477 A1 in the name of E2 Drives SA, discloses *inter alia* a method for providing electrical propulsion assistance in a vehicle having pedals arranged on a crank axis, a first electric motor, a second electric motor, said pedals and said electric motors being arranged to propel said vehicle via a planetary gear set.

When the vehicle of WO 2013/160477 A1 is at a stand-still, and a torque is being applied to said pedals in a sense of forward motion of said vehicle, i.e. when a take-off attempt occurs, a small forward rotation of the pedals (1°-2°) is permitted through a corresponding amount of play provided on the freewheel arrangement of the motor attached to the sun gear, whereupon the start of the motor to provide a propulsion supporting torque is triggered.

It is a disadvantage of the known take-off assistance method that the amount of forward rotation is too small to provide a gradual transition between stand-still and movement which would result in a smooth sensation for the cyclist. It is a further disadvantage of the known take-off assistance method that it does not provide a sufficiently fine control over the actuator and over the countertorque provided to the pedals during the forward rotation to give the cyclist a feeling of having the vehicle under control by means of the pedals.

International patent application publication no. WO2017/129275 A1 in the name of SWISSMOVE AG discloses a pedal drive system, in particular for an electrical vehicle or a training apparatus, and for generating electrical power from muscle power of a user with at least one pedal and an electric generator, connected mechanically with said at least one pedal, is provided. To improve the haptic feel and feedback at the pedal, a control unit is provided for controlling a feedback torque, applied at said pedal, wherein the control unit comprises a haptic renderer, configured for control of said feedback torque based on at least one predefined pedal reference trajectory. That application does not describe an assisted take-off mode.

Unpublished international patent application no. PCT/EP2016/082582 in the name of Tomas Keppens describes a powertrain for a pedal vehicle, such as a bicycle, which powertrain comprises a first and a second electric motor and a planetary gear set comprising a sun gear, a ring gear and a planet carrier, wherein the sun gear is connected to the first motor, the ring gear is connected to the crank axle receiving the user input, and the planet carrier is connected to an output of the powertrain for transmitting power to at least one output element, such as a wheel, of the vehicle, whereby the second motor is directly connected to the output of the powertrain. That application does not describe an assisted take-off mode.

**Summary of the Invention**

According to an aspect of the present invention, there is provided a method for providing electrical propulsion assistance in a vehicle having pedals arranged on a crank axis, an electric motor, an actuator, and a control unit that is configured to provide control signals to said electric motor and said actuator based on a crank axle input; said pedals, said electric motor, and said actuator being configured to propel said vehicle via a drive train;

the method comprising: detecting as a take-off attempt, the simultaneous occurrence of at least the following conditions: said vehicle is at a stand-still and a torque is being applied to said pedals in a sense of forward motion of said vehicle; permitting during said take-off attempt a forward rotation of said pedals; and providing a propulsion supporting torque after said detection of said take-off attempt; wherein appropriate first control signals are provided to said electric motor and said actuator to apply a predetermined countertorque to said pedals during said forward rotation; and wherein appropriate second control signals are provided to said electric motor and said actuator to provide said propulsion supporting torque when a predetermined take-off criterion is met.

The term "stand-still" as used herein refers to the vehicle being either completely at rest relative to the ground surface upon which its wheels rest, or else at a very small speed (i.e, under a predetermined threshold speed, such as 2 km/h, or 1 km/h, or .5 km/h). Conversely, the "take-off" phase of the operation of the pedal vehicle is the phase between "stand-still" and the point at which a certain minimum velocity is reached, the minimum velocity being for example in the range of 2 km/h - 5 km/h.

It is an advantage of the present invention that it provides a sufficiently controlled (and preferably soft) countertorque to the pedals during the forward rotation and a sufficiently controlled assistance to give the cyclist a feeling of having the vehicle under control by means of the pedals, resulting in a very natural and intuitive cycling experience.

The present invention is based *inter alia* on the insight of the inventors that the presence of two actuating mechanisms (the above mentioned electric motor and actuator) provides sufficient degrees of freedom to control the movement or torque of the pedals independently of the movement of the vehicle.

The present invention is further based on the insight of the inventors that by going against the general prejudice of bicycle users and manufacturers that the pedals normally feel rigidly connected to the bicycle during take-off, a safer and at the same time more pleasant take-off experience can be provided.

Where the present application mentions "an electric motor" and "an actuator", this does not exclude the presence in the same vehicle of additional electric motors and/or additional actuators. It is further noted that the notion of "actuator" covers electric motors, such that the phrase "an electric motor and an actuator" may, in certain embodiments, refer to two electric motors.

In an embodiment of the method according to the present invention, said predetermined take-off criterion comprises said pedals reaching a predetermined angular position.

It is an advantage of this embodiment that the assistance kicks in a deterministic manner, whereby the user will easily learn when to expect the assistance.

In an embodiment of the method according to the present invention, said predetermined take-off criterion comprises said pedals achieving a predetermined angular velocity.

It is an advantage of this embodiment that it avoids false starts, i.e. the triggering of the take-off assistance when no take-off is intended.

In an embodiment, the method according to the present invention further comprises sensing a torque applied by a user via said pedals, wherein said propulsion supporting torque is proportional to said sensed torque.

It is an advantage of this embodiment that it gives the user (cyclist) even more control over the take-off phase, in a very intuitive way: by applying more torque (muscle power) on the pedals, the electric assistance will immediately increase, and by applying less torque on the pedals, the electric assistance will immediately decrease. This provides a significant and immediately noticeable difference with the prior art electric bicycles, whose take-off assistance is either "off" or "on".

Thus, the user controls the assistance (between the minimum and the maximum assistance level that can be delivered by the system) and can achieve a safe and controlled take-off with minimal muscle power.

In an embodiment of the method according to the present invention, said forward rotation of said pedals permitted during said take-off attempt involves an angular travel of more than 2°, preferably at least 5°, and most preferably at least 10°.

It is an advantage of this embodiment that it provides a sufficient amount of pedal travel to allow for a smooth transition between the user signaling the intent to start and the assistance kicking in. This embodiment further reduces the risk of false starts.

In an embodiment of the method according to the present invention, said take-off attempt is detected if, in addition to said conditions, one of said pedals is positioned in the top forward quadrant.

This embodiment is based on the insight of the inventors that it is quite natural for cyclists to position one of the pedals in the top forward quadrant prior to attempting to start riding the bicycle. It is an advantage of this embodiment that it avoids false starts, i.e. the triggering of the take-off assistance when no take-off is intended.

In an embodiment, the method according to the present invention further comprises controlling said electric motor and said actuator so as to move one of said pedals towards a position in the top forward quadrant.

The inventors have found that this is an extremely convenient feature, automating a behavior that is common among cyclists. By way of example, it can be implemented in a particularly advantageous manner when the present invention is implemented with a PD controller. The movement may for example be triggered by detection of a backward movement of the pedals, or on system start-up.

In an embodiment of the method according to the present invention, said actuator is configured to modify a gear ratio between a gear driven by said pedals and a gear arranged on a hub of one of said wheels.

The inventors have found that this is a particularly advantageous way to implement the independent control of the movement and torque of the pedals and the movement of the vehicle.

In a particular embodiment, said drive train comprises a gear system in the transmission path between said pedals and a wheel of said vehicle, said gear system being shiftable during stand-still, and said actuator is configured to shift said gear system.

This embodiment may be implemented using a hub gear.

In another particular embodiment, said drive train comprises a planetary gear set with a sun gear, a ring gear and a planet carrier, wherein the sun gear is connected to a first one of said at least two electric motors, the ring gear is connected to the crank axle receiving the user input, and the planet carrier is connected to an output.

The inventors have found that a planetary gear set is a particularly advantageous drive train to combine the input of one or two electric motors and the muscle-powered pedals.

In an embodiment of the method according to the present invention, said electric motor is arranged in a hub of a wheel of said vehicle and configured to apply a torque to said wheel.

This embodiment is particularly advantageous in a dual motor setup for an electrically assisted bicycle, whereby the actuator is a second motor and the drive train includes a planetary gear as described above.

According to an aspect of the invention, there is provided a computer program product comprising code means configured to cause a processor to carry out the steps of the method as described above.

According to an aspect of the invention, there is provided a controller for providing control signals to an electric motor and an actuator arranged to provide electrical propulsion assistance in a pedal vehicle, the controller being configured to carry out the steps of the method as described above.

According to an aspect of the invention, there is provided an electrically assisted pedal vehicle comprising an electric motor, an actuator, and a control unit as described above, configured to provide control signals to said electric motor and said actuator based on a crank axle input, said pedals and said electric motor being arranged to propel said vehicle via a drive train comprising a planetary gear set.

The technical effects and advantages of embodiments of the computer program product, the controller, and the electrically assisted pedal vehicle according to the present invention correspond, *mutatis mutandis,* to those of the corresponding embodiments of the method according to the present invention.

**Brief Description of the Figures**

These and other features and advantages of embodiments of the present invention will now be described in more detail with reference to the accompanying drawings, in which:

- Figure 1 presents a flow chart of an embodiment of the method according to the present invention;
- Figure 2 schematically illustrates a pedal vehicle according to an embodiment of the present invention;
- Figures 3-5 schematically illustrate the operation of the drive train in a pedal vehicle according to an embodiment of the present invention;
- Figure 6 schematically illustrates several drive train variants for pedal vehicles, which may be applied in embodiments of the present invention;
- Figure 7 illustrates the crank axle references used in the description of embodiments of the present invention;
- Figure 8 presents a flow chart illustrating the decision process in an embodiment of the present invention; and
- Figure 9 is a diagram of the evolution of crank axle countertorque and support torque as may be provided by an electrically assisted pedal vehicle operating in accordance with the principles of the present invention.

**Detailed Description of Embodiments**

Several methods of combining muscle power and power from one or more electric motors to propel a pedal vehicle are known. In bicycles with a sole hub motor, the motor is placed in the center of a bicycle wheel (front or rear), while the cyclist-driven pedal drive system remains independent from the motor, apart from the fact that the requirement of having an equal linear speed of the perimeter of each of the wheels - which roll over a common ground surface - imposes a coupling between motor speed and pedal speed. The hub motor may be geared (with internal planetary gears) or gearless.

In some electrically assisted bicycles, mid-drive motors or "mid motors" are installed in the lower bracket of the bicycle, in combination with the crank shaft and pedal arrangement. Such a mid motor may be coupled to the pedal system and an output by means of a planetary gear.

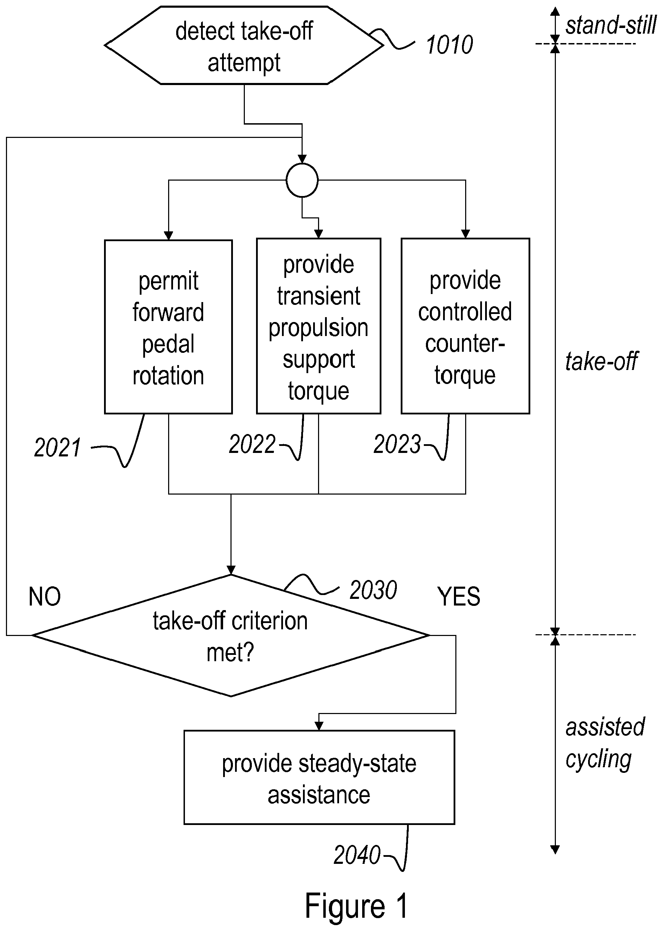

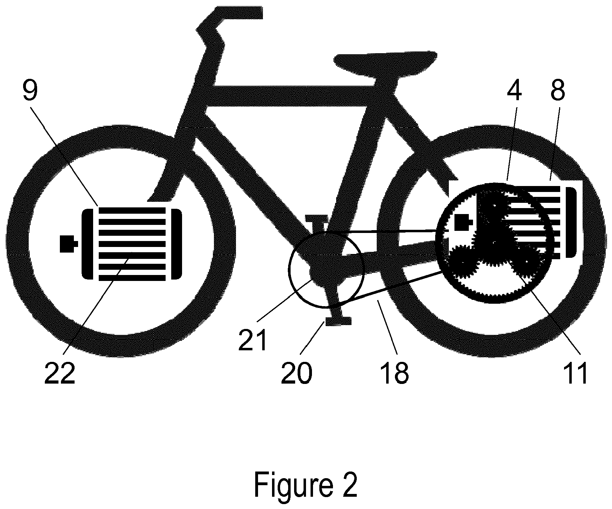

With reference to Figures 1 and 2, the present invention pertains generally to a method for providing electrical propulsion assistance in a vehicle having pedals arranged on a crank axis **21,** an electric motor **9,** an actuator **8,** and a control unit (not illustrated) that is configured to provide control signals to the electric motor **9** and the actuator **8** based on a crank axle input. The pedals, the electric motor **9,** and the actuator **8** are configured to propel the vehicle via a drive train. The method according to the invention comprises:

- detecting **1010** as a take-off attempt, the simultaneous occurrence of at least the following conditions:

    ◦ the vehicle is at a stand-still and
    ◦ a torque is being applied to the pedals in a sense of forward motion of the vehicle;

- permitting during the take-off attempt a forward rotation of the pedals **2021;** and
- providing a propulsion supporting torque **2022, 2040** after the detection of the take-off attempt **1010.**

Appropriate first control signals are provided to the electric motor **9** and the actuator **8** to apply a predetermined countertorque to the pedals **2023** during the forward rotation. Appropriate second control signals are provided to the electric motor **9** and the actuator **8** to provide the propulsion supporting torque **2040** when a predetermined take-off criterion is met **2030**.

It is noted that propulsion supporting torque is provided **2040** when a predetermined take-off criterion is met **2030**. This does not exclude the providing of propulsion supporting torque, possibly according to a different regime, in the period between the detection of a take-off attempt **1010** and the detection that the predetermined take-off criterion is met **2030**. This optional "initial" propulsion supporting torque **2022** can help smoothen out the transition between standstill and steady-state support **2040**.

The method may comprise sensing a torque applied by a user via said pedals, wherein said propulsion supporting torque is proportional to said sensed torque. The inventors have found that this type of support provides a very natural cycling experience, whereby the cyclist maintains the impression that it is his muscle power that controls the speed and acceleration of the vehicle.

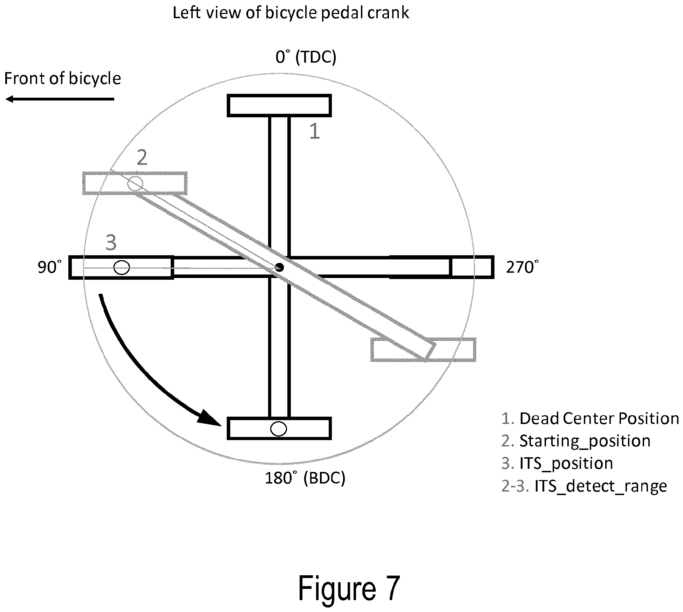

The forward rotation of the pedals permitted during the take-off attempt may involve an angular travel of more than 2°, preferably at least 5°, and most preferably at least 10°. In the embodiment of Figures 7-9, described in more detail below, the travel is approximately 30°.

The detection of take-off attempts may be limited to situations where one of the pedals is positioned in the top forward quadrant, or in a specific sub-range of the top forward quadrant, or in a specific position in the top forward quadrant. The method may involve controlling the electric motor **9** and the actuator **8** so as to move one of the pedals towards a position in the top forward quadrant, upon detection of a backward movement of the pedals.

The actuator **8** is preferably configured to modify a gear ratio between a gear driven by said pedals and a gear arranged on a hub of one of said wheels.

Unpublished international patent application no. PCT/EP2016/082582 in the name of Tomas Keppens describes, using the references of Figure 2 of the present application, a powertrain **1** for a pedal vehicle, such as a bicycle, which powertrain **1** comprises a first **8** and a second **9** electric motor and a planetary gear set **4** comprising a sun gear, a ring gear and a planet carrier, wherein the sun gear is connected to the first motor **8,** the ring gear is connected to the crank axle **21** receiving the user input, and the planet carrier is connected to an output of the powertrain **1** for transmitting power to at least one output element, such as a wheel, of the vehicle, via a chain or belt **18,** whereby the second motor **9** is connected to the output of the powertrain **1,** for instance by operating on the front wheel at the front hub **22,** which provides ground coupling with the first motor **8**.

The mechanical arrangement of international patent application no. PCT/EP2016/082582, as described above, is particularly suitable for being controlled by the method of the present invention, whereby the "second electrical motor" **9** of PCT/EP2016/082582 takes on the role of the "electric motor" **9** of the present invention (primarily responsible for providing traction), and whereby the "first electrical motor" **8** of PCT/EP2016/082582 takes on the role of the "actuator" **8** of the present invention (primarily responsible for influencing the perceived gear ratio and providing (counter)torque and positioning to the pedals). However, the scope of application of the present invention is not limited to that particular arrangement.

In the context of the present description, the pedal vehicle can be a bicycle, for road, or land, but may also be a bicycle for water. A road or land bicycle typically has two, three or four wheels as output elements, a water bicycle may have vanes as output elements. The output axle thus may be connected to one or more wheels as output elements or to one or more vanes or any other output element to be driven. A pedal vehicle can be a regular two-wheel bicycle, or may be a handbike, or may be a tricycle or one-wheeler etc. For example, for a one-wheeler, there is a permanent contact between the pedals and the wheel, such that adding gears is not possible. In this case, in the absence of a freewheel, a variable gear ratio could be obtained while maintaining the continuous connection between crank and wheels with a powertrain as described in PCT/EP2016/082582. For clarity purposes, the remainder of the description is developed with reference to a two-wheeled electrically assisted bicycle; the skilled person will understand that this example is chosen without loss of generality and without the intent to limit the invention to this particular type of vehicle. The various features of the powertrain of PCT/EP2016/082582 as described herein may be considered as merely optional for the present invention, unless otherwise indicated or implied.

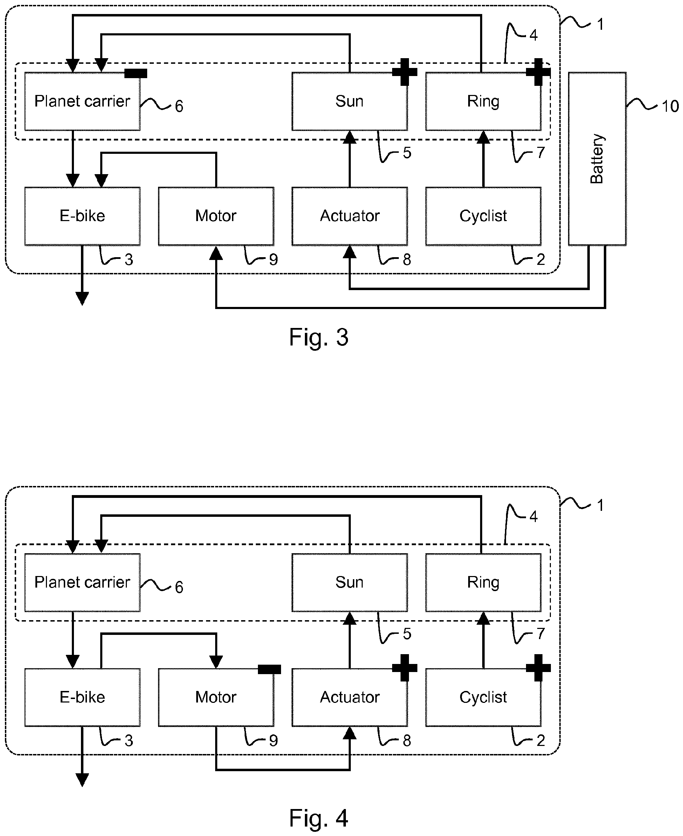

Figures 3-5 schematically illustrate the operation of the drive train of PCT/EP2016/082582, to provide the context for the further description of the present invention. To avoid ensure consistency with the claims of the present invention, the "first motor" of PCT/EP2016/082582 will hereinafter be referred to as the "actuator **8",** and the "second motor" of PCT/EP2016/082582 will hereinafter be referred to as the "motor **9"**.

Figure **3** shows a schematic representation of the hybrid powertrain **1.** The powertrain **1** comprises an input **2** provided by a cyclist on a crank axle, typically via pedals. The powertrain **1** further comprises an output **3** to an output axle, typically a hub or wheel of the bicycle. Further, the powertrain **1** comprises a planetary gear set **4,** having a sun **5,** a planet carrier **6** and a ring gear **7.** Also, the powertrain **1** comprises an actuator **8** and a motor **9.** The actuator **8** and the motor **9** are typically electric motors, which can be used as motor/generator. The configuration of the powertrain **1** comprises that the crank axle **2** is connected to the ring gear **7,** the actuator **8** is connected to the sun gear **5.** The actuator **8** and the motor **9** are connected to a battery **10.** The torque provided by the sun gear **5** and the torque provided by the ring gear **7** have the same operational direction, in this figure marked with a "+", while the planet carrier **6** provides the counter torque in opposite direction, designated with a "-" in its turn for driving the output shaft **3.** When all planetary gear shafts rotate in the same direction, the power delivered on each of the shafts has the same operational orientation as the corresponding torque. For example, the power delivered on one of the shafts is positive when the corresponding torque has a positive operational direction and the corresponding rotational direction of the corresponding shaft is positive. As such, there are no serial losses, and optimal use is made of the planetary gear system. The motor **9** directly contributes to the assistance of the cyclist by delivering power to the output shaft **3** directly.

During cruising the battery **10** charges both the actuator **8** and the motor **9.** However, in case of an empty battery **10,** as shown in Figure **4,** the cyclist **2** delivers power to the planetary gear set **4.** The motor **9,** as it is connected to the output axle **3** through the ground, runs along with the output axle **3.** The power the motor **9** there takes, can be fed to the actuator **8.** Here, the motor **9** then works as a generator, allowing some serial losses due to the direct connection between the motor **9** and the actuator **8** in this situation. However, due to the absence of a clutch, between the sun **5** and a housing of the powertrain **1** or between the ring gear **7** and the planet carrier **6,** the actuator **8** is preferably powered at all times to avoid slipping through of the cyclist in case of an empty battery. Also, due to the direct connection of the motor **9** with the output axle **3,** and due to the absence of a freewheel between the cyclist input **2** and the ring gear **7,** regenerative braking becomes possible, as shown in figure **4.**

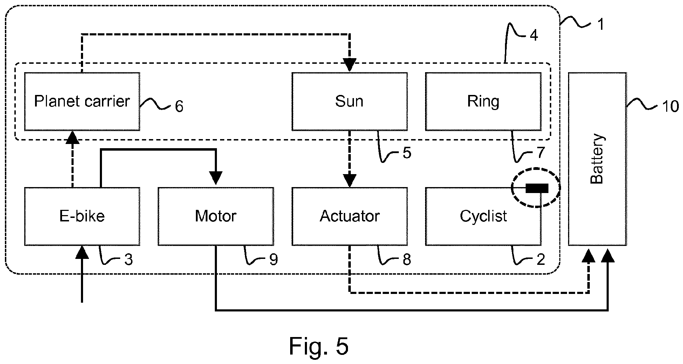

In the embodiment of figure **5,** the motor **9** provides for charging of the battery **10** with excess brake energy received on the output axle **3.** The excess brake energy can thus be transmitted from the output axle **3** via the motor **9** to the battery **10** to charge the battery **10.** Charging of the battery **10** with the motor **9** is already possible when the pedals are kept stationary, so at a stationary position of the crank axle **3.** When the cyclist further provides for a negative torque on the crank axle, and thus ring gear, regenerative braking via the actuator **8** becomes possible as well.

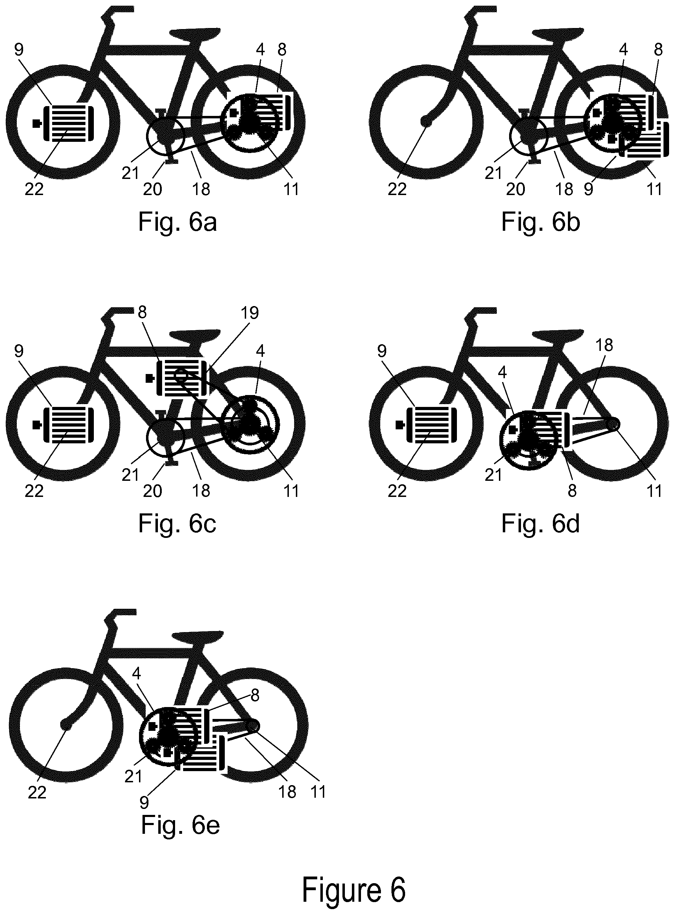

Figure 6 shows possible embodiments of configurations of the powertrain **1.** Figure 6a shows the actuator **8** and the planetary gear set **4** at the pedal-driven rear hub **11,** and the motor **9** at the non-pedal driven front wheel hub **22.** The input from the cyclist via pedals **20** mounted to a crank **21** is received on the rear hub **11** via a chain or belt **18.** Figure 6b shows the actuator **8** and the motor **9,** as well as the planetary gear set **4** at the pedal-driven rear hub **11.** Figure 6c shows the actuator **8** positioned at the frame of the bicycle, the planetary gear set is positioned at the pedal-driven rear hub **11,** and the motor **9** is positioned at the non-pedal driven front hub **22.** The actuator **8** can then be connected to the planetary gear set **4** via an additional chain or belt **19.** In the embodiment of figure 6d the actuator **8** and the planetary gear set **4** are both positioned at the crank. Thus, the cyclist input can be directly received from the crank **21,** the output of the powertrain **1** can then be transmitted to, here, the rear wheel, via a chain or belt **18.** In the embodiment of figure 6e, the powertrain **1** is positioned at the crank **21.**

The present invention deals with an issue that is experienced by all cyclists, namely that starting a bicycle from standstill (also referred to as "take-off") can be hard because a high starting torque is required in order to quickly get the bicycle moving at a stable speed, so that the cyclist can balance himself. This high starting torque is generally provided by the cyclist by putting his/her weight on the bicycle pedal, after having manually placed that pedal in the proper starting position. By doing this, the cyclist destabilizes him/herself, as the bicycle is at that moment not yet stable because of the very low speed. When starting uphill for example, this may cause the cyclist to fall out of balance, having to recollect himself and start again. Also, the need to provide this high starting torque by putting weight on the pedals requires a saddle position that is generally too high to allow the cyclist to keep his feet on the ground when standing still.

Electric bicycles are heavier than standard bicycles and generally also have a little more drag than standard bicycles due to the friction in the electric motor and added transmission elements. This means that they require an even higher starting torque to bring them up to speed than standard bicycles do. Electric bicycles are often used by people in a more advanced age segment, who may lack both the strength and the balance to safely start a bicycle purely on muscle power. It would therefore be better to deliver at least some of the required starting torque, and preferably nearly all or all of the required starting torque, by means of the electric motor, to make starting the bicycle easier and safer.

Known electric bicycles in which the assistance level is mainly pedal controlled (as opposed to being controlled by a throttle handle or button) generally have either one of the following systems to control the electric assistance torque (EAT) of the electric motor.

A first type of system measures the speed of the crankshaft and gives EAT when the crankshaft is rotating or controls the EAT via a more complex function of the crankshaft speed. However, in the case of a crankshaft speed controlled EAT, the EAT is always zero at standstill because in a standard bicycle transmission, the crankshaft speed is always directly proportional to the bicycle speed:

$$crankshaft\_speed = K*bicycle\_speed$$

where K is the gear ratio of the transmission.

A second type of system measures the cyclist's torque on the crankshaft either directly with a sensor or indirectly via a state estimator and gives EAT proportional to the crankshaft torque. In case of a crankshaft torque controlled EAT, there is the theoretical possibility of providing a high EAT at standstill, as it is possible for the cyclist to deliver a torque on the crankshaft at standstill and the torque sensor is able to measure this torque. However, the torque measurement on the crankshaft is subject to noise and inaccuracies. When simply used as measured, the crankshaft torque will give rise to an EAT at standstill, for example:

$$EAT = S*crankshaft\_torque$$

where S is the support factor, and this could happen even when the cyclist is not doing anything or when the bicycle is left unattended. This problem can be solved in two ways: either the support level S is chosen low (for example, $1 \le S \le 2$) or the crankshaft torque measurement is filtered and only communicated to the motor controller when it exceeds a certain offset. If the support factor $S$ is chosen to be low, the EAT will also be low and will thus provide little assistance to the cyclist when starting. Besides, even when the support level $S$ is chosen to be low, the motor is still delivering the EAT at all times, even when the bicycle is idle, but it is no longer a safety issue since the EAT will be very low and will not be enough to set the bicycle in motion. However, the fact that the motor is working constantly makes this solution unpractical and it will cause a lot of wasted electrical energy. The other option is to filter the measured torque signal, which will eliminate the noise on the signal, and to only provide an EAT when the measured crankshaft torque is higher than a certain threshold value. This threshold value is chosen so that all measurements of crankshaft torque are below the threshold when the bicycle is idle. This does mean that the threshold needs to be set rather high, as the disturbances introduced by quickly pushing the bicycle back and forth for example can already be quite high (e.g. accelerating the inertia of the crankshaft and pedals when pulling the bicycle backwards). A high threshold however is a disadvantage because it makes the bicycle's reaction to a user's input less swift and sensitive. The threshold creates an offset of sensitivity on the cyclist's input:

$$EAT = S*(crankshaft\_torque - threshold\_torque)$$

In fact, to make absolutely sure that the measured crankshaft torque stays under the threshold at all times, even when the bicycle is being moved by hand, the threshold needs to be set so high that it would create an unacceptable delay on the cyclist's input.

To avoid the above-mentioned problems, bicycles that use a crankshaft torque controlled EAT, only start providing EAT at a certain minimum bicycle speed (e.g. 5km/h). Thus, for example, WO2013/160477 A1 specifies that assistance is triggered as soon as the speed of the bottom bracket reaches a certain threshold, which requires a relatively fine-grained sensing of the crank speed to provide sufficient reactivity. Once the bicycle is moving, small variations in the EAT are not noticeable anymore and are generally negligible compared to the EAT that is the result of the cyclist's torque on the crankshaft. However, this means that the cyclist still has to provide all the starting torque at standstill by muscle power.

Hence, neither one of these systems is able to provide a high EAT at bicycle standstill.

Embodiments of the present invention are based on the insight of the inventors that the occurrence of a (slight) forward motion of the crankshaft when the bicycle is standing still would be a suitable criterion to detect a cyclist's intention to start ("ITS"). Embodiments of the present invention are further based on the insight of the inventors that such crank movement at standstill is possible in a serial or serial-parallel system, because the crankshaft can rotate forward even when the bicycle is standing still.

For the convenience of the reader, the description will use the reference frame and direction conventions illustrated in Figure 7.

Typically, a cyclist intending to start will position either the left or the right pedal in a starting position in the first quadrant forward of top dead center (starting_position) before starting the bicycle (defining "top dead center" as the highest possible position of the pedal, which can be defined as an angular coordinate value of 0 radians, and "forward" rotation as the direction in which the crankshaft rotates when cranking the bicycle forward, as shown in Figure 7).

In one embodiment of the present invention, the predetermined take-off criterion comprises said pedals reaching a predetermined angular position, as will now be described in more detail. Accordingly, when the cyclist wants to start, the system will allow the crankshaft to rotate forward with a controlled countertorque from the starting position (starting_position) over a pre-specified angular range (ITS_detect_range) towards an assistance trigger point (ITS_position), before controlling the electric motor **9** to provide the steady-state EAT (step **2040** in Figure 1):

$$ITS\_position = starting\_position + ITS\_detect\_range.$$

The starting position is preferably a position in the 0°-90° quadrant. The use of such a required starting position helps to avoid false (unintended) starts, and is compatible with the general habit of cyclists to place one of the pedals in the 0°-90° quadrant in preparation for take-off. Without limitation, the starting position may for example be at 0°, at 5°, at 10°, or at 15°.

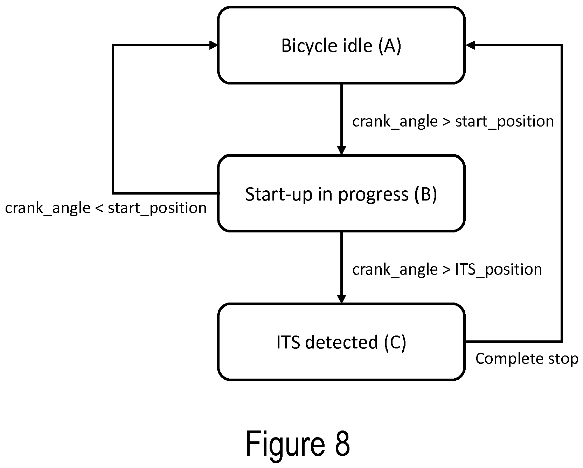

Figure 8 illustrates how in this embodiment the controller logic transitions from the "Bicycle Idle" state (**A**) to the "Start-up in progress" state (**B**) when the crank angle changes so as to exceed the starting position. In other words, when the cyclist moves the pedals of the non-moving vehicle so as to cross the starting position in the forward direction, a take-off attempt will be detected (point **1010** in the flow chart of Figure 1).

From this point on, the system may provide an initial assistance (step **2022** in Figure 1) by activating the motor **9,** while the crankshaft is allowed to rotate forward (step **2021** in Figure 1) over said pre-specified angular range against a controlled countertorque (step **2023** in Figure 1), which is imposed by the actuator **8.** In this angular range, the position of the pedals may be used as an input in the control of the level of the initial assistance (the greater the angle, the higher the level of assistance; in particular, the combination of pedal angle dependent assistance (delivered by the motor **9**) and controlled countertorque (delivered by the actuator **8**) can give the cyclist the feeling that the pedals are soft and act as an accelerator (throttle pedal).

When the pedals reach ITS_position, which may be set at the preferred angle of 90°, as illustrated in Figure 7, or at another suitable point, the take-off criterion (selection **2030** in Figure 1) is met, and the controller logic enters the "ITS detected" state (**C**). From that point on, the pedals may be controlled to feel rigid, and the EAT can be controlled on the basis of crankshaft position, crankshaft speed, crankshaft torque, or a combination thereof, by appropriately controlling the actuator **8** and the motor **9** (step **2040** in Figure 1).

For completeness, Figure 8 further illustrates how the controller logic transitions back from state (B) to state (A) when the crank angle is moved back across the starting position, and how it transitions back from state (C) to state (A) when the vehicle is brought to a complete stop.

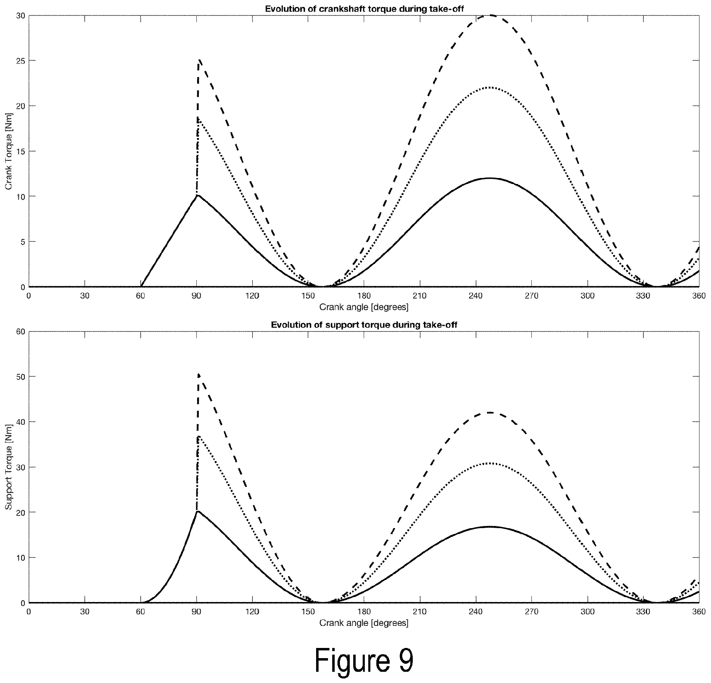

Figure 9 (top) presents a diagram of exemplary evolutions of crank axle countertorque in this embodiment. While the pedals are at an angle that is smaller than the starting position (0° to 60°, in this example), the crank axle is perceived to be decoupled from the bicycle wheels: the actuator **8** is operated in such a way that the planetary gear allows the pedals to freely move towards the starting position without experiencing countertorque (state A). Once the starting position is reached (60° in this example), the pedals will be felt to "catch" onto the bicycle, and the cyclist will experience a countertorque while the system provides pedal position controlled assistance (state B) during the rotation through the ITS_detect_range. Once the ITS_detect_range has been fully traversed and the pedals reach the ITS_position (90° in this example), a steady-state regime may be entered (state C), which is recognized by the sinusoidal torque evolution. It should be noted that the diagram contains three different curves, for simulated cyclists that apply different amounts of force on the pedals. These three curves coincide completely while the controller logic is in state (A) or state (B), but vary once the steady-state regime is entered.

Figure 9 (bottom) presents a diagram of an exemplary evolution of the support torque, delivered by the motor **9,** in this embodiment. While the pedals are at an angle that is smaller than the starting position (0° to 60°, in this example), no support is provided. Once the starting position is reached (60° in this example), support can be gradually increased, preferably in function of the pedal angle (for instance, following a parabolic curve) (state B), during the rotation through the ITS_detect_range. Once the ITS_detect_range has been fully traversed and the pedals reach the ITS_position (90° in this example), a steady-state regime may be entered (state C), which is recognized by the sinusoidal support torque evolution. In this example, the steady-state support regime consists of amplifying the cyclist's own torque, which explains why the sinusoids of both diagrams have the same phase; as in the top diagram, different curves are shown for different simulated cyclists.

Several variations of the specific system described above are possible. It is *inter alia* possible to leave out the starting position requirement (skipping state (A)), or to use a different criterion to enter the steady state regime. In one embodiment of the present invention, said predetermined take-off criterion comprises said pedals achieving a predetermined angular velocity. Accordingly, when the cyclist wants to start, the system allows the crankshaft to rotate forward with a controlled countertorque, until a pre-specified angular rotational speed of the crankshaft is reached. This will then trigger the ITS. Again, the EAT can subsequently be controlled on the basis of crankshaft position, crankshaft speed, crankshaft torque, or a combination thereof.

The functions described hereinabove as pertaining to the controller may be implemented in dedicated hardware (e.g., ASIC), configurable hardware (e.g., FPGA), programmable components (e.g., a DSP or general purpose processor with appropriate software), or any combination thereof. The same component may also include other functions. The present invention also pertains to a computer program, optionally stored on a computer-readable medium, comprising code means adapted to cause a processor in a system with appropriate interfaces to perform the method described above in its various embodiments.

The present invention also pertains to a controller for providing control signals to an electric motor **9** and an actuator **8** arranged to provide electrical propulsion assistance in a pedal vehicle, the controller being configured to carry out the steps of the method described above in its various embodiments.

The present invention also pertains to an electrically assisted pedal vehicle comprising an electric motor **9,** an actuator **8,** and a control unit configured to provide control signals to said electric motor **9** and said actuator **8** based on a crank axle input, said pedals and said electric motor being arranged to propel said vehicle via a drive train comprising a planetary gear set.

While the invention has been described hereinabove with reference to specific embodiment, this has been done to clarify and not to limit the invention, the scope of which is determined by the appended claims.

**Claims**

1. A method for providing electrical propulsion assistance in a vehicle having pedals arranged on a crank axis, an electric motor, an actuator, and a control unit that is configured to provide control signals to said electric motor and said actuator based on a crank axle input; said pedals, said electric motor, and said actuator being configured to propel said vehicle via a drive train;
   the method comprising:

   - detecting as a take-off attempt, the simultaneous occurrence of at least the following conditions:

      ◦ said vehicle is at a stand-still; and
      ◦ a torque is being applied to said pedals in a sense of forward motion of said vehicle;

   - permitting during said take-off attempt a forward rotation of said pedals; and
   - providing a propulsion supporting torque after said detection of said take-off attempt;

   **characterized in that** appropriate first control signals are provided to said electric motor and said actuator to apply a predetermined countertorque to said pedals during said forward rotation;
   **and in that** appropriate second control signals are provided to said electric motor and said actuator to provide said propulsion supporting torque when a predetermined take-off criterion is met.

2. The method according to claim 1, wherein said predetermined take-off criterion comprises said pedals reaching a predetermined angular position.

3. The method according to claim 1, wherein said predetermined take-off criterion comprises said pedals achieving a predetermined angular velocity.

4. The method according to any of the preceding claims, further comprising sensing a torque applied by a user via said pedals, wherein said propulsion supporting torque is proportional to said sensed torque.

5. The method according to any of the preceding claims, wherein said forward rotation of said pedals permitted during said take-off attempt involves an angular travel of more than 2°, preferably at least 5°, and most preferably at least 10°.

6. The method according to any of the preceding claims, wherein said take-off attempt is detected if, in addition to said conditions, one of said pedals is positioned in the top forward quadrant.

7. The method according to any of the preceding claims, further comprising controlling said electric motor and said actuator so as to move one of said pedals towards a position in the top forward quadrant.

8. The method according to any of the preceding claims, said actuator is configured to modify a gear ratio between a gear driven by said pedals and a gear arranged on a hub of one of said wheels.

9. The method according to claim 8, wherein said drive train comprises a gear system in the transmission path between said pedals and a wheel of said vehicle, said gear system being shiftable during stand-still, and wherein said actuator is configured to shift said gear system.

**10.** The method according to claim 8,
wherein said actuator comprises a second electric motor,
wherein said drive train comprises a planetary gear with a sun gear, a ring gear and a planet carrier,
wherein the sun gear is connected to said second electric motor, the ring gear is connected to the crank axle receiving the user input, and the planet carrier is connected to an output.

**11.** The method according to claim 10, wherein said first electric motor is arranged in a hub of a wheel of said vehicle and configured to apply a torque to said wheel.

**12.** A computer program product comprising code means configured to cause a processor to carry out the steps of the method according to any of the preceding claims.

**13.** A controller for providing control signals to an electric motor and an actuator arranged to provide electrical propulsion assistance in a pedal vehicle, the controller being configured to carry out the steps of the method according to any of the preceding claims.

**14.** An electrically assisted pedal vehicle comprising an electric motor, an actuator, and a control unit according to claim 13 configured to provide control signals to said electric motor and said actuator based on a crank axle input, said pedals and said electric motor being arranged to propel said vehicle via a drive train comprising a planetary gear set.

detect take-off
attempt *1010*

*stand-still*

permit
forward
pedal
rotation

provide
transient
propulsion
support
torque

provide
controlled
counter-
torque

*2021* *2022* *2023*

*take-off*

NO

*2030* YES

take-off criterion
met?

provide steady-state
assistance

*2040*

*assisted
cycling*

Figure 1

Figure 2

Fig. 3

Fig. 4

Fig. 5

Fig. 6a

Fig. 6b

Fig. 6c

Fig. 6d

Fig. 6e

Figure 6

Left view of bicycle pedal crank

0° (TDC)

Front of bicycle

1

2

3

90°

270°

180° (BDC)

1. Dead Center Position
2. Starting_position
3. ITS_position
2-3. ITS_detect_range

# Figure 7

Bicycle idle (A)

crank_angle > start_position

crank_angle < start_position

Start-up in progress (B)

crank_angle > ITS_position

ITS detected (C)

Complete stop

Figure 8

Figure 9

Europäisches
Patentamt

European
Patent Office

Office européen
des brevets

# EUROPEAN SEARCH REPORT

Application Number

EP 18 18 0607

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/128818 A1 (BIKE2 APS [DK]) 3 September 2015 (2015-09-03) * the whole document * ----- | 1-14 | INV. B62M6/45 B62M6/55 B62M6/60 |
| A,D | WO 2017/129275 A1 (SWISSMOVE AG [CH]) 3 August 2017 (2017-08-03) * page 24, line 26 - page 34, line 2 * * figures 1-9 * ----- | 1-14 | |

TECHNICAL FIELDS
SEARCHED     (IPC)

B62M

The present search report has been drawn up for all claims

| Place of search | Date of completion of the search | Examiner |
|---|---|---|
| The Hague | 18 December 2018 | Fernández Plaza, P |

**EP 3 587 235 A1**

## ANNEX TO THE EUROPEAN SEARCH REPORT
## ON EUROPEAN PATENT APPLICATION NO.

EP 18 18 0607

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2018

| Patent document cited in search report | | Publication date | Patent family member(s) | | Publication date |
|---|---|---|---|---|---|
| WO 2015128818 | A1 | 03-09-2015 | CN | 106414152 A | 15-02-2017 |
| | | | EP | 3110687 A1 | 04-01-2017 |
| | | | US | 2016362021 A1 | 15-12-2016 |
| | | | WO | 2015128818 A1 | 03-09-2015 |
| WO 2017129275 | A1 | 03-08-2017 | CN | 108602547 A | 28-09-2018 |
| | | | EP | 3408168 A1 | 05-12-2018 |
| | | | TW | 201736187 A | 16-10-2017 |
| | | | WO | 2017129275 A1 | 03-08-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013160477 A1
- WO 2017129275 A1

- EP 2016082582 W